# EUROPÄISCHE PATENTSCHRIFT

(11) **EP 2 289 663 B1**
(45) Veröffentlichungstag und Bekanntmachung des Hinweises auf die Patenterteilung: **17.01.2018**
(21) Anmeldenummer: 10168786.1
(22) Anmeldetag: 07.07.2010
(51) Int. Cl.: B23P 19/06, B25B 29/02, F16B 31/04

(54) **Hydraulische Gewindebolzenspannvorrichtung und Verfahren zum Anziehen von großen Schrauben mittels der hydraulischen Gewindebolzenspannvorrichtung**
Hydraulic stud bolt tensioning device and method for pulling large screws using hydraulic stud bolt tensioning device
Dispositif de serrage hydraulique de boulons filetés et procédé d'enfilage de grandes vis à l'aide du dispositif de serrage hydraulique de boulons filetés

(30) Priorität: 31.08.2009 DE 102009043907
(43) Veröffentlichungstag der Anmeldung: 02.03.2011
(73) Patentinhaber: Hohmann, Frank, 59581 Warstein (DE); Hohmann, Jörg, 59872 Meschede (DE)
(72) Erfinder: Hohmann, Frank, 59581 Warstein (DE); Hohmann, Jörg, 59872 Meschede (DE)
(74) Vertreter: Christophersen, Ulrich Rudolf

(56) Entgegenhaltungen:
- DE-A1-102005 015 922
- DE-A1-102005 019 258
- DE-C1- 19 854 062
- US-A- 4 013 895
- US-A- 4 413 396

## Beschreibung

Die Erfindung betrifft eine hydraulische Gewindebolzenspannvorrichtung zum Anziehen und Lösen hoch belasteter Schrauben mit einem sich auf einem mittels eines Gewindebolzens und einer Mutter zu verspannendem Maschinenteil abstützenden Zylinder, einer auf ein Gewindeende des Gewindebolzens aufschraubbaren Wechselbuche, wenigstens einem in dem Zylinder abgedichtet geführten, sich an einer Verlängerung der auf ein über die Mutter überstehendes Gewindeende des Gewindebolzens aufgeschraubten Wechselbuchse abstützenden, druckbeaufschlagbaren, mit dem Zylinder einen Ringraum bildenden Spannkolben, einer Druckmittelzufuhr, einer Einstellvorrichtung zum Einstellen eines einer Soll-Vorspannkraft entsprechenden Soll-Drucks, einer Einrichtung zum Druckentlasten der Gewindebolzenspannvorrichtung und einem Drucksensor.

Eine derartige hydraulische Gewindebolzenspannvorrichtung ist in der DE 10 2005 015 922 A1 derselben Anmelder beschrieben.

Gewindebolzenspannvorrichtungen haben die Aufgabe, eine genau vorgegebene Vorspannkraft auf einen Gewindebolzen aufzubringen, um die auf den Gewindebolzen aufgeschraubte Mutter anziehen oder lösen zu können. Hierzu wird eine Wechselbuchse der Gewindebolzenspannvorrichtung auf das überstehende Gewinde oberhalb einer Mutter aufgeschraubt und danach die Gewindebolzenspannvorrichtung unter hydraulischen Druck gesetzt. Das hat zur Folge, dass der Gewindebolzen durch Längen gespannt wird. Die dabei auf den Gewindebolzen aufgebrachten Kräfte sind außerordentlich hoch, wodurch der Gewindebolzen und die Gewindebolzenspannvorrichtung und dessen Einzelteile sehr stark beansprucht werden. Um zu vermeiden, dass diese hoch beanspruchten Einzelteile beim Spannen eines Gewindebolzens brechen, weil wegen Überschreiten der von diesen Teilen aufnehmbaren Lastwechsel ein Ermüdungsbruch eintreten kann, wird angestrebt, die durch Ermüdungsbruch gefährdeten Teile auszuwechseln, bevor ein solcher Ermüdungsbruch eintritt. Dieses trifft auch für das vorzeitige Auswechseln anderer Verschleißteile zu, wie z. B. Dichtungen. Erreicht wird dies durch einen so genannten Lastwechselzähler, der durch die Druckbeaufschlagung der Gewindebolzenspannvorrichtung bei jeder Betätigung weitergeschaltet wird, wobei das Zählen von Leerhüben dadurch vermieden wird, dass der Lastwechselzähler nur oberhalb eines vorgebbaren Drucks weiterschaltet. Ein derartiger Lastwechselzähler ist in der DE 43 24 888 A1 derselben Anmelder beschrieben.

Eine weitere Sicherheitsmaßnahme ist in der DE 43 41 707 A1 derselben Anmelder beschrieben, die wirksam wird, wenn die bei diesen hydraulischen Gewindebolzenspannvorrichtungen besonders hoch beanspruchte Wechselbuchse nach einer gewissen Anzahl von Schraubendehnung, d. h. Lastwechseln im Bereich des Schraubengewindeendes in Einzelfällen vor Erreichen der rechnerisch erreichbaren Lastwechsel abreißt.

Da sich in einem solchen Fall das gesamte System schlagartig entspannt, kann das abgerissene Teil der Wechselbuchse, zusammen mit dem Kolben und dem Zylinder, mit erheblicher Energie weggeschleudert werden und bedeutende Beschädigungen an benachbarten Maschinenteilen sowie Verletzungen der Bedienperson hervorrufen. Um dies zu vermeiden, ist in der DE 43 41 707 A1 derselben Anmelder eine Fangvorrichtung für diese Teile der Gewindebolzenspannvorrichtung vorgesehen.

Sowohl der aus der DE 43 24 888 A1 bekannte Lastwechselzähler als auch die aus der DE 43 41 707 A1 bekannte hydraulische Gewindebolzenspannvorrichtung mit Fangvorrichtung haben sich bewährt, jedoch schützen diese Vorrichtungen nicht vor einem Abreißen des zu spannenden Gewindebolzens, was insbesondere dann eintreten kann, wenn der Gewindebolzen eine Vorschädigung durch Überdehnen, durch ein schadhaftes Gewinde oder durch Materialfehler aufweist.

Aus der US 4,013,895 ist ein Verfahren zum Spannen einer Schraubverbindung aus einem Bolzen und einer darauf aufgeschraubten Mutter bekannt, bei dem die Mutter unter Einsatz eines elektrischen, hydraulischen oder pneumatischen Antriebs mit einem entsprechend starken Anzugsmoment angezogen wird. Der Betriebspunkt, bei dem wegen des Annäherns an die Streckgrenze das weitere Anziehen der Mutter unterbrochen wird, wird rechnerisch aus der Erfassung des Drehwinkels und des Verdrehmomentes der Mutter ermittelt, indem aus diesen beiden Werten mathematisch zunächst die Ableitung gebildet wird. Diese hat über die Dauer des normalen Anziehens der Mutter einen konstanten Wert. Der Betriebspunkt, ab dem das weitere Anziehen der Mutter unterbrochen wird, ist erreicht, sobald sich dieser nahezu konstante Wert der Ableitung ändert.

Der Erfindung liegt dementsprechend die Aufgabe zugrunde, eine hydraulische Gewindebolzenspannvorrichtung zum Anziehen und Lösen hochbelasteter Schrauben und ein Verfahren zum Steuern der Druckbeaufschlagung der hydraulischen Gewindebolzenspannvorrichtung vorzuschlagen, mit denen sich ein Abreißen des Gewindebolzens vermeiden lässt. Gelöst wird diese Aufgabe mit einer hydraulischen Gewindebolzenspannvorrichtung der eingangs erwähnten Art durch eine Einrichtung zum Erkennen des Erreichens der Streckgrenze während des Spannens des Gewindebolzens und eine Steuereinrichtung zur Druckentlastung der Gewindebolzenspannvorrichtung bei oder kurz nach Erreichen der Streckgrenze des zu spannenden Gewindebolzens, und insbesondere durch eine Differenziereinrichtung für die vom Drucksensor gelieferten Signale zum Bestimmen des Druckgradienten während einer Druckbeaufschlagung und eine Steuereinrichtung, die die

Druckentlastung der Gewindebolzenspannvorrichtung bewirkt, wenn der Druckgradient vor Erreichen des Solldrucks unter einen vorgegebenen Wert absinkt.

Die Erfindung geht von der Überlegung aus, dass der Druck während einer Druckbeaufschlagung unterhalb der Elastizitätsgrenze des Gewindebolzens linear ansteigt. Wenn die Elastizitätsgrenze erreicht ist, flacht die Druck-Zeit-Kurve ab, erreicht ein Maximum und fällt danach bis auf die Zerreißlast ab. Bei einem Schraubenwerkstoff ohne Fließgrenze ist dieser Kurvenverlauf stetig, bei einem Schraubenwerkstoff mit Fließgrenze fällt die Kurve von einer oberen auf eine untere Fließgrenze ab und steigt dann erneut bis zum Maximalwert an, wonach sie wieder auf die Zerreißlast absinkt. Der durch das Differenzieren dieser Kurve gewonnene Druckgradient ist somit bis zum Erreichen der Elastizitätsgrenze konstant und sinkt dann stetig bei einem Schraubenwerkstoff ohne Fließgrenze ab, sowie sprunghaft bei einem Schraubenwerkstoff mit Fließgrenze.

Durch eine Vorschädigung des Gewindebolzens, beispielsweise im Gewinde oder aufgrund eines Materialfehlers oder auch durch Überlastung oberhalb der mechanisch zugelassenen Kenngrößen kommt es zu einer überproportionalen Längung des Gewindebolzens, die zum Abriss führt, wenn keine Druckentlastung der Gewindebolzenspannvorrichtung erfolgt. Der Abriss des Gewindebolzens lässt sich erfindungsgemäß mit großer Sicherheit verhindern, so dass die Gewindebolzenspannvorrichtung auch nicht weggeschleudert werden kann und Beschädigungen an benachbarten Maschinenteilen sowie Verletzungen der Bedienperson vermieden werden. Die in der DE 43 41 707 A1 beschriebene Fangvorrichtung greift nämlich nur, wenn die Wechselbuchse abreißt, nicht jedoch wenn der Gewindebolzen bricht.

Die Druckbeaufschlagung kann durch ein elektrisch oder pneumatisch angetriebenes Hydraulikaggregat oder durch eine Handpumpe erfolgen.

Pneumatisch angetriebene Hydraulikaggregate oder Handpumpen arbeiten intermittierend, so dass die Differenziereinrichtung in diesem Fall so eingerichtet ist, dass der Druckgradient nur während der Druckanstiegsphasen bestimmt und die Druckentlastung nur bewirkt werden, wenn der Druckgradient vor Erreichen des Solldrucks während einer Druckanstiegsphase unter einen vorgegebenen Wert absinkt.

Die Differenziereinrichtung kann so eingerichtet sein, dass sie eine Druckentlastung bewirkt, wenn der Druckgradient vor Erreichen des Solldrucks unter einen vorgegebenen Wert absinkt, der nah beim Druckgradienten des elastischen Bereichs liegt, oder wenn der Druckgradient vor Erreichen des Solldrucks plötzlich negativ wird, was bei einem Schraubenwerkstoff mit Fließgrenze der Fall ist. In diesem Fall erfolgt die Druckentlastung sehr schnell nach Überschreiten der Elastizitätsgrenze.

Das Abreißen des Gewindebolzens lässt sich auch vermeiden, wenn die Differenziereinrichtung so eingerichtet ist, dass die Druckentlastung bewirkt wird, wenn der Druckgradient vor Erreichen des Solldrucks gleich Null wird, d. h. die Druckentlastung erfolgt wenn das Maximum der Druck-Zeit-Kurve erreicht ist.

Die eingangs erwähnte Aufgabe wird auch durch ein Verfahren zum Steuern der Druckbeaufschlagung einer hydraulischen Gewindebolzenspannvorrichtung der vorerwähnten Art gelöst, indem die Druckbeaufschlagung der Gewindebolzenspannvorrichtung bei oder kurz nach Erreichen der Streckgrenze des zu spannenden Gewindebolzens durch eine Druckentlastung beendet wird, insbesondere indem der Druckgradient während einer Druckbeaufschlagung der Gewindebolzenspannvorrichtung durch eine Differenziereinrichtung ermittelt und ein Signal zum Auflösen einer schnellen Druckentlastung der Gewindebolzenspannvorrichtung erzeugt wird, wenn der Druckgradient vor Erreichen des Solldrucks unter einen vorgegebenen Wert absinkt, wobei der Druckgradient während einer intermittierenden Druckbeaufschlagung nur während der Druckanstiegsphase bestimmt wird und das Signal zum Auslösen einer schnellen Druckentlastung nur dann erzeugt wird, wenn der Druckgradient vor Erreichen des Solldrucks während einer Druckanstiegsphase unter einen vorgegebenen Wert absinkt oder eine schnelle Druckentlastung bewirkt wird, wenn der Druckgradient vor Erreichen des Solldrucks gleich Null ist, oder eine schnelle Druckentlastung bewirkt wird, wenn der Druckgradient vor Erreichen des Solldrucks plötzlich negativ wird.

Vorzugsweise kann bei Auslösen einer schnellen Druckentlastung eine Fehlermeldung generiert werden, so dass die Bedienperson sofort auf einen schadhaften Gewindebolzen aufmerksam gemacht wird.

Die Erfindung wird nachstehend anhand eines in der Zeichnung dargestellten Ausführungsbeispiels des näheren erläutert. In der Zeichnung zeigen:

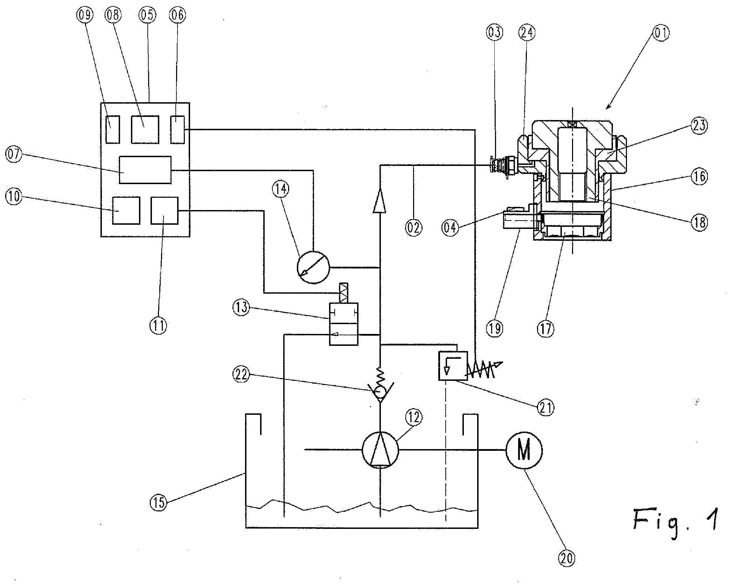

- Fig. 1: eine schematische Darstellung einer hydraulischen Gewindebolzenspannvorrichtung mit Steuereinrichtung und Hydraulikdruckquelle,
- Fig. 2: eine Druck-Zeit-Kurve eines Schraubenwerkstoffs ohne Fließgrenze und
- Fig. 3: eine Druck-Zeit-Kurve eines Schraubenwerkstoffs mit Fließgrenze.

Die in der Zeichnung dargestellte hydraulische Gewindebolzenspannvorrichtung, die allgemein mit der Bezugsziffer 1 bezeichnet ist, entspricht im Wesentlichen der DE 43 41 707 A1 derselben Anmelder.

Ein nicht dargestelltes Maschinenteil, das z. B. ein Flansch eines Maschinengehäuses sein kann, soll mittels eines ebenfalls nicht dargestellten Gewindebolzens und einer darauf geschraubten, nicht dargestellten Mutter verspannt werden.

Um auf den Gewindebolzen eine genau kontrollierbare Vorspannung aufzubringen und um Torsionsmomente vom Gewindebolzen, die eine zusätzliche Belastung des Gewindebolzens darstellen, fernzuhalten, wird die Mutter zunächst nur von Hand zur Anlage an dem Maschinenteil auf den Gewindebolzen aufgeschraubt. Die Länge des Gewindebolzens ist so bemessen, dass über die Mutter ein freies Gewindeende hervorsteht.

Zum Spannen des Gewindebolzens wird die Gewindebolzenspannvorrichtung 1 über die Mutter die auf den Gewindebolzen aufgeschraubt ist, gesetzt, wobei eine mit einem Innensechskant 17 versehene Drehhülse 16 die Mutter formschlüssig übergreift. Eine Wechselbuchse 18, die mit einem Spannkolben 23 im Zylinder 24 der Gewindebolzenspannvorrichtung 1 verbunden ist, wird auf das überstehende Gewindeende des Gewindebolzens geschraubt, wonach die Gewindebolzenspannvorrichtung 1 einsatzbereit ist. Eine Hydraulikpumpe 12, die im dargestellten Ausführungsbeispiel durch einen elektrischen Antriebsmotor 20, pneumatisch oder von Hand angetrieben sein kann, ist über ein elektrisches Wegeventil 13, eine Druckmittelzufuhr 2, ein Rückschlagventil 22 und einen Druckmittelanschluss 3 mit der Gewindebolzenspannvorrichtung 1 verbunden und erlaubt es, eine Druckbeaufschlagung der Druckmittelzufuhr 6 oder eine Druckentlastung zu einem Auffangbehälter 15 hin zu schalten. Das Wegeventil 13 erlaubt es, bei Bedarf sehr schnell eine Druckentlastung zum Auffangbehälter 15 hin zu schalten.

Die Drehhülse 16 ist mit einer Außenverzahnung versehen, in die ein Zahnrad eines Getriebes 19 eingreift. Mit dem Getriebe 19 ist ein Drehantrieb 4 verbunden, der in einen Innenvierkant des Getriebes 19 eingreift.

Eine Steuereinrichtung 5 ist mit dem Drehantrieb 8, dem elektrischen Wegeventil 13, einem Drucksensor 14 und einem einstellbaren Druckregelventil 21 verbunden.

Der Drucksensor 14 misst den durch die Hydraulikpumpe 12 zur Druckmittelzufuhr 6 geleiteten Druck.

Die Steuereinrichtung 5 weist eine Eingabevorrichtung 6 für die Soll-Vorspannung des Gewindebolzens oder für den Soll-Druck der Hydraulikpumpe 12, der sich daraus und der Fläche des Kolbens der Gewindebolzenspannvorrichtung 1 ergibt, und die eine entsprechende Einstellung des Druckregelventils 21 bewirkt, sowie eine Eingabevorrichtung 9 für einen Soll-Druckgradienten auf, der als Druckentlastungskriterium dient, wenn der Druckgradient vor Erreichen des für die jeweilige Schraubverbindung eingegebenen Solldrucks unter den über die Eingabevorrichtung 9 eingegebenen Soll-Druckgradienten absinkt.

Die Steuereinrichtung 5 umfasst einen Rechner 7, eine Differenziereinrichtung 10 für die vom Drucksensor 14 übermittelten Signale und eine Steuereinrichtung 11 zum Ansteuern der Druckmittelzufuhr 2 zur Gewindebolzenspannvorrichtung 1 über das elektrische Wegeventil 13.

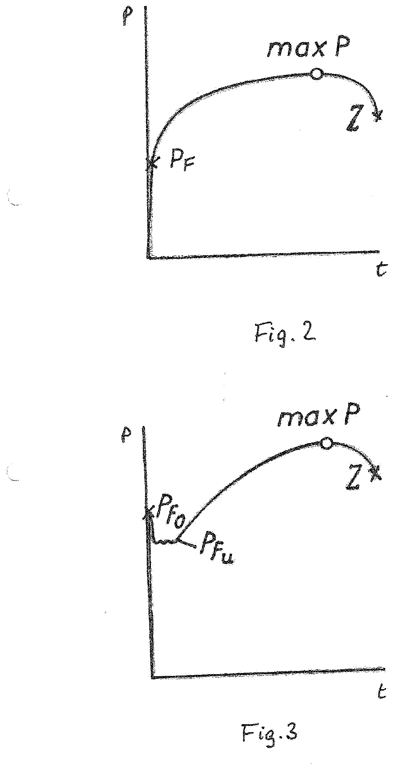

Fig. 2 zeigt eine Druck-Zeit-Kurve für einen Schraubenwerkstoff ohne Fließgrenze. Bis zur Fließgrenze P_{F} steigen der Druck und die damit durch die Gewindebolzenspannvorrichtung 1 auf den Gewindebolzen aufgebrachte Vorspannkraft linear an. Ab der Fließgrenze P_{F} verringert sich die Steigung, d. h. der Druckgradient sinkt bis zum Maximalwert maxP auf Null, um dann bis zur Zerreißlast Z mit negativem Druckgradienten abzusinken.

In Fig. 3 ist der Verlauf der Druck-Zeit-Kurve für einen Werkstoff mit Fließgrenze dargestellt. Diese Kurve gilt im Wesentlichen für Stahlwerkstoffe. In diesem Fall steigt der Druck linear bis zur oberen Fließgrenze P_{Fo}, sinkt dann plötzlich bis zur unteren Fließgrenze P_{Fu} ab und steigt dann stetig mit immer geringer werdendem Druckgradienten bis zum Maximalwert maxP, um dann mit negativen Druckgradienten bis zur Zerreißlast Z abzusinken.

Diese Kurven besitzen Allgemeingültigkeit, so dass Gewindebolzen üblicherweise bis zu einem Wert unterhalb der Werte P_{F} bzw. P_{Fo} vorgespannt werden, wonach die auf das Gewindeende des Gewindebolzens aufgeschraubte Mutter mittels des Drehantriebs 4 mit einem solchen Drehmoment beigedreht wird, dass ein Setzen aller zu verspannenden Teile erreicht ist, wonach die Gewindebolzenspannvorrichtung 1 durch Öffnen des elektrischen Wegeventils 13 zum Auffangbehälter 15 hin druckentlastet wird. Diese Druckentlastung erfolgt automatisch durch das Steuergerät 5 entsprechend einem vorher über die Eingabevorrichtung 6 eingegebenen Solldruck, der beispielsweise bei 90 % der Fließgrenze P_{F} bzw. P_{Fo} liegen kann.

Mittels der Differenziereinrichtung 10 werden die vom Drucksensor 14 zum Steuergerät 5 geleiteten Drucksignale laufend differenziert, um den Druckgradienten der Druck-Zeit-Kurve zu bestimmen. Solange der Druckaufbau noch unterhalb der Elastizitätsgrenze P_{F} bzw. P_{Fo} liegt, ist der Druckgradient konstant, und die Druckentlastung kann nach dem Erreichen des eingestellten Solldrucks und dem Beidrehen der Mutter erfolgen.

Weist der Gewindebolzen eine Vorschädigung im Gewinde oder am Schaft, beispielsweise durch einen Anriss auf, oder ist ein Materialfehler vorhanden, der den wirksamen Querschnitt des Gewindebolzens herabsetzt, wird die Elastizitätsgrenze P_{F} bzw. P_{Fo} vor Erreichen des Solldrucks erreicht und der Druckgradient wird kleiner oder sogar negativ. Um in diesem Fall ein Abreißen des Gewindebolzens durch Überlastung zu vermeiden, wird durch das Steuergerät 5 ein Signal an das elektrische Wegeventil 13 geleitet, dass eine sofortige und schnelle Druckentlastung zum Auffangbehälter 15 hin bewirkt. Gleichzeitig wird im Anzeigefeld 8 Steuergerät 5 eine Fehlermeldung generiert, so dass die Bedienperson eine Information über den schadhaften Gewindebolzen erhält, der dann sofort ausgewechselt werden kann. Gleichzeitig wird die Hydraulikpumpe 12 abgeschaltet, um eine unnötige Förderung von Hydraulikfluid unter hohem Druck zu vermeiden.

Wenn die Hydraulikpumpe 12 einen elektrischen Antrieb aufweist, ist die Hydraulikfluidförderung kontinuierlich, und die Druck-Zeit-Kurven entsprechen den Figuren 2 und 3. Wird die Hydraulikpumpe 12 von Hand oder pneumatisch betätigt, erfolgt die Förderung des Hydraulikfluids intermittierend, so dass sich Druckanstiegsphasen und Konstantdruckphasen abwechseln. In diesem Fall ist der Rechner 7 im Steuergerät 5 so eingerichtet, dass der Druckgradient nur während der Druckanstiegsphasen bestimmt und die Druckentlastung nur bewirkt werden, wenn der Druckgradient vor Erreichen des Solldrucks während einer Druckanstiegsphase unter einen vorgegebenen Wert absinkt. Dieser vorgegebene Wert des Druckgradienten lässt sich über eine Eingabevorrichtung 9 des Steuergeräts 5 eingeben und kann beispielsweise 90 % des Druckgradienten im elastischen Bereich oder weniger betragen, beispielsweise auch gleich Null oder negativ sein. Bei einem sich gemäß Fig. 2 verhaltenden Werkstoff des Gewindebolzens kann die Druckentlastung somit etwas oberhalb der für den geschädigten Gewindebolzen geltenden Fließgrenze P_{F} oder im Maximum der Druck-Zeit-Kurve oder kurz danach, auf jeden Fall jedoch vor Erreichen der Zerreißlast Z erfolgen. Bei einem Werkstoff mit einem Verhalten gemäß Fig. 3, insbesondere Kohlenstoffstahl, erfolgt die Druckentlastung vorzugsweise, wenn der Druckgradient nach dem Punkt P_{FO} negativ wird.

Mit der erfindungsgemäßen Ausgestaltung der Steuerung einer hydraulischen Gewindebolzenspannvorrichtung lässt sich ein Abreißen eines schadhaften Gewindebolzens beim Spannen mittels der hydraulischen Gewindebolzenspannvorrichtung mit Sicherheit vermeiden.

### Bezugszeichenliste

- 1: Gewindebolzenspannvorrichtung
- 2: Druckmittelzufuhr
- 3: Druckmittelanschluss
- 4: Drehantrieb
- 5: Steuergerät
- 6: Eingabevorrichtung für einen Solldruck
- 7: Rechner
- 8: Anzeigefeld
- 9: Eingabevorrichtung für einen vorgegebenen Wert des Druckgradienten
- 10: Differenziereinrichtung
- 11: Steuereinrichtung
- 12: Hydraulikpumpe
- 13: Einrichtung zum Druckentlasten, elektrisches Wegeventil
- 14: Drucksensor
- 15: Auffangbehälter
- 16: Drehhülse
- 17: Innensechskant
- 18: Wechselbuchse
- 19: Getriebe
- 20: Antriebsmotor
- 21: einstellbares Druckregelventil
- 22: Rückschlagventil
- 23: Spannkolben
- 24: Zylinder

## Patentansprüche

1. Hydraulische Gewindebolzenspannvorrichtung (1) zum Anziehen und Lösen hochbelasteter Schrauben mit einem sich auf einem mittels eines Gewindebolzens und einer Mutter zu verspannenden Maschinenteil abstützenden Zylinder (24), einer auf ein Gewindeende des Gewindebolzens aufschraubbaren Wechselbuchse (18), wenigstens einem in dem Zylinder (24) abgedichtet geführten, sich an einer Verlängerung der auf ein über die Mutter überstehendes Gewindeende des Gewindebolzens aufgeschraubten Wechselbuchse (18) abstützenden, druckbeaufschlagbaren, mit dem Zylinder (24) einen Ringraum bildenden Spannkolben (23), einer Druckmittelzufuhr (2), einer Einstellvorrichtung (5, 6) zum Einstellen eines einer Soll-Vorspannkraft entsprechenden Solldrucks, einer Einrichtung (13) zum Druckentlasten der Gewindebolzenspannvorrichtung (1), und einem Drucksensor (14), **gekennzeichnet durch** eine Einrichtung (10) zum Erkennen des Erreichens der Streckgrenze während des Spannens des Gewindebolzens durch Längen desselben, und eine Steuereinrichtung (7, 11) zur Druckentlastung der Gewindebolzenspannvorrichtung (1) bei oder kurz nach Erreichen der Streckgrenze des zu spannenden Gewindebolzens.

2. Hydraulische Gewindebolzenspannvorrichtung (1) nach Anspruch 1, **dadurch gekennzeichnet, dass** die Einrichtung (10) zum Erkennen des Erreichens der Streckgrenze eine Differenziereinrichtung (10) zum Bestimmen des Druckgradienten während einer Druckbeaufschlagung der Gewindebolzenspannvorrichtung (1) ist, und die Steuereinrichtung (7, 11) die Druckentlastung der Gewindebolzenspannvorrichtung (1) bewirkt, wenn der Druckgradient vor Erreichen des Solldrucks unter einen vorgegebenen Wert absinkt.

3. Hydraulische Gewindebolzenspannvorrichtung (1) nach Anspruch 2, **dadurch gekennzeichnet, dass** die Differenziereinrichtung (10) bei intermittierend wirkender Druckbeaufschlagung den Druckgradienten nur während der Druckanstiegphasen bestimmt und die Druckentlastung nur bewirkt, wenn der Druckgradient vor Erreichen des Solldrucks während einer Druckanstiegsphase unter einen vorgegebenen Wert absinkt.

4. Hydraulische Gewindebolzenspannvorrichtung (1) nach Anspruch 2 oder 3, **dadurch gekennzeichnet, dass** die Differenziereinrichtung (10) die Druckentlastung bewirkt, wenn der Druckgradient vor Erreichen des Solldrucks gleich Null wird.

5. Hydraulische Gewindebolzenspannvorrichtung (1) nach Anspruch 2 oder 3, **dadurch gekennzeichnet, dass** die Differenziereinrichtung (10) die Druckentlastung bewirkt, wenn der Druckgradient vor Erreichen des Solldrucks plötzlich negativ wird.

6. Verfahren zum Steuern der Druckbeaufschlagung einer hydraulischen Gewindebolzenspannvorrichtung nach einem der Ansprüche 1 - 5, **dadurch gekennzeichnet, dass** die Druckbeaufschlagung der Gewindebolzenspannvorrichtung bei oder kurz nach Erreichen der Streckgrenze des durch Längen zu spannenden Gewindebolzens durch eine Druckentlastung beendet wird.

7. Verfahren nach Anspruch 6, **dadurch gekennzeichnet, dass** der Druckgradient während einer Druckbeaufschlagung der Gewindebolzenspannvorrichtung durch eine Differenziereinrichtung ermittelt und ein Signal zum Auslösen einer schnellen Druckentlastung der Gewindebolzenspannvorrichtung erzeugt wird, wenn der Druckgradient vor Erreichen des Solldrucks unter einen vorgegebenen Wert absinkt.

8. Verfahren nach Anspruch 6, **dadurch gekennzeichnet, dass** der Druckgradient während einer intermittierenden Druckbeaufschlagung nur während der Druckanstiegsphasen bestimmt wird und das Signal zum Auslösen einer schnellen Druckentlastung nur dann erzeugt wird, wenn der Druckgradient vor Erreichen des Solldrucks während einer Druckanstiegsphase unter einen vorgegebenen Wert absinkt

9. Verfahren nach einem der Ansprüche 6 bis 8, **dadurch gekennzeichnet, dass** eine schnelle Druckentlastung bewirkt wird, wenn der Druckgradient vor Erreichen des Solldrucks gleich Null ist.

10. Verfahren nach einem der Ansprüche 6 bis 8, **dadurch gekennzeichnet, dass** eine schnelle Druckentlastung bewirkt wird, wenn der Druckgradient vor Erreichen des Solldrucks plötzlich negativ wird.

11. Verfahren nach einem der Ansprüche 6 bis 10, **dadurch gekennzeichnet, dass** bei Auslösen einer schnellen Druckentlastung eine Fehlermeldung generiert wird.

## Claims

1. Hydraulic threaded bolt tensioning device (1) for tightening and loosening highly loaded screws with a cylinder (24) which is supported on a machine part which is to be tensioned by means of a threaded bolt and a nut, a replaceable bush (18) which can be screwed onto a thread end of the threaded bolt, at least one tensioning piston (23) which is guided in a sealed fashion in the cylinder (24), is supported on an extension of the replaceable bush (18) which is screwed onto a thread end, protruding over the nut, of the threaded bolt, can be pressure-loaded and forms an inner space with the cylinder (24), a pressure medium supply (2), a setting device (5, 6) for setting a setpoint pressure which corresponds to a setpoint pretensioning force, a device (13) for relieving the pressure on the threaded bolt tensioning device (1), and a pressure sensor (14), **characterized by** a device (10) for detecting when the extension limit is reached during the tensioning of the threaded bolt by elongation thereof, and a control device (7, 11) for relieving the pressure on the threaded bolt tensioning device (1) when or briefly after the extension limit of the threaded bolt to be tensioned is reached.

2. Hydraulic threaded bolt tensioning device (1) according to Claim 1, **characterized in that** the device (10) for detecting when the extension limit is reached is a differentiating device (10) for determining the pressure gradient during pressure loading of the threaded bolt tensioning device (1), and the control device (7, 11) brings about the pressure relief of the threaded bolt tensioning device (1) if the pressure gradient drops below a predefined value before the setpoint pressure is reached.

3. Hydraulic threaded bolt tensioning device (1) according to Claim 2, **characterized in that** during intermittently acting pressure loading the differentiating device (10) determines the pressure gradient only during the pressure increase phases, and brings about the pressure relief only if the pressure gradient drops below a predefined value before the setpoint pressure is reached during a pressure increase phase.

4. Hydraulic threaded bolt tensioning device (1) according to Claim 2 or 3, **characterized in that** the differentiating device (10) brings about the pressure relief if the pressure gradient becomes equal to zero before the setpoint pressure is reached.

5. Hydraulic threaded bolt tensioning device (1) according to Claim 2 or 3, **characterized in that** the differentiating device (10) brings about the pressure relief if the pressure gradient suddenly becomes negative before the setpoint pressure is reached.

6. Method for controlling the pressure loading of a hydraulic threaded bolt tensioning device according to one of Claims 1-5, **characterized in that** the pressure loading of the threaded bolt tensioning device is ended when or briefly after the extension limit of the threaded bolt to be tensioned by extension is reached is ended by pressure relief.

7. Method according to Claim 6, **characterized in that** during pressure loading of the threaded bolt tensioning device the pressure gradient is determined by a differentiating device and a signal for triggering rapid pressure relief of the threaded bolt tensioning device is generated if the pressure gradient drops below a predefined value before the setpoint pressure is reached.

8. Method according to Claim 6, **characterized in that** during intermittent pressure loading the pressure gradient is determined only during the pressure increase phases, and the signal for triggering rapid pressure relief is generated only when the pressure gradient drops below a predefined value before the setpoint pressure is reached during a pressure increase phase.

9. Method according to one of Claims 6 to 8, **characterized in that** a rapid pressure relief is brought about if the pressure gradient is equal to zero before the setpoint pressure is reached.

10. Method according to one of Claims 6 to 8, **characterized in that** a rapid pressure relief is brought about if the pressure gradient suddenly becomes negative before the setpoint pressure is reached.

11. Method according to one of Claims 6 to 10, **characterized in that** a fault message is generated when a rapid pressure relief is triggered.

## Revendications

1. Dispositif de serrage à tige filetée hydraulique (1) pour le serrage et le desserrage de vis fortement sollicitées avec un cylindre (24) s'appuyant sur une partie de machine à serrer au moyen d'une tige filetée et d'un écrou, une douille (18) pouvant être vissée sur une extrémité filetée de la tige filetée, au moins un piston de serrage (23), guidé de manière étanche dans le cylindre (24), s'appuyant sur un prolongement de la douille (18) vissée sur une extrémité filetée de la tige filetée dépassant de l'écrou, pouvant être mis sous pression, formant avec le cylindre (24) un espace annulaire, une alimentation en fluide sous pression (2), un dispositif de réglage (5, 6) pour le réglage d'une pression de consigne correspondant à la force de précontrainte de consigne, un dispositif (13) pour la décharge de pression du dispositif de serrage à tige filetée (1) et un capteur de pression (14), **caractérisé par** un dispositif (10) pour la détection que la limite d'étirement est atteinte pendant le serrage de la tige filetée par allongement de celle-ci, et un dispositif de commande (7, 11) pour la décharge de pression du dispositif de serrage à tige filetée (1) lorsque ou immédiatement après que la limite d'étirement de la tige filetée à serrer est atteinte.

2. Dispositif de serrage à tige filetée hydraulique (1) selon la revendication 1, **caractérisé en ce que** le dispositif (10) pour la détection que la limite d'étirement est atteinte est un dispositif différentiel (10) pour la détermination du gradient de pression pendant une mise sous pression du dispositif de serrage à tige filetée (1) et le dispositif de commande (7, 11) provoque la décharge de pression du dispositif de serrage à tige filetée (1) lorsque le gradient de pression diminue en dessous d'une valeur prédéterminée avant d'atteindre la pression de consigne.

3. Dispositif de serrage à tige filetée hydraulique (1) selon la revendication 2, **caractérisé en ce que** le dispositif différentiel (10) ne détermine le gradient de pression lors d'une mise sous pression par intermittence que pendant les phases d'augmentation de la pression et ne provoque la décharge de pression que lorsque le gradient de pression diminue en dessous d'une valeur prédéterminée avant d'atteindre la pression de consigne pendant une phase d'augmentation de la pression.

4. Dispositif de serrage à tige filetée hydraulique (1) selon la revendication 2 ou 3, **caractérisé en ce que** le dispositif différentiel (10) provoque la décharge de pression lorsque le gradient de pression devient nul avant d'atteindre la pression de consigne.

5. Dispositif de serrage à tige filetée hydraulique (1) selon la revendication 2 ou 3, **caractérisé en ce que** le dispositif différentiel (10) provoque la décharge de pression lorsque le gradient de pression devient subitement négatif avant d'atteindre la pression de consigne.

6. Procédé de commande de la mise sous pression d'un dispositif de serrage à tige filetée hydraulique selon l'une des revendications 1 à 5, **caractérisé en ce que** la mise sous pression du dispositif de serrage à tige filetée se termine par une décharge de pression lorsque ou immédiatement après que la limite d'étirement de la tige filetée à serrer par allongement est atteinte.

7. Procédé selon la revendication 6, **caractérisé en ce que** le gradient de pression est déterminé pendant une mise sous pression du dispositif de serrage à tige filetée par un dispositif différentiel et un signal de déclenchement d'une décharge de pression rapide du dispositif de serrage à tige filetée est généré lorsque le gradient de pression diminue en dessous d'une valeur prédéterminée avant d'atteindre la pression de consigne.

8. Procédé selon la revendication 6, **caractérisé en ce que** le gradient de pression est déterminé pendant une mise sous pression par intermittence uniquement pendant les phases d'augmentation de la pression et le signal de déclenchement d'une décharge de pression rapide n'est généré que lorsque le gradient de pression diminue en dessous d'une valeur prédéterminée avant d'atteindre la pression de consigne pendant une phase d'augmentation de la pression.

9. Procédé selon l'une des revendications 6 à 8, **caractérisé en ce qu'**une décharge de pression rapide est provoquée lorsque le gradient de pression est égale à zéro avant d'atteindre la pression de consigne.

10. Procédé selon l'une des revendications 6 à 8, **caractérisé en ce qu'**une décharge de pression rapide est provoquée lorsque le gradient de pression devient subitement négatif avant d'atteindre la pression de consigne.

11. Procédé selon l'une des revendications 6 à 10, **caractérisé en ce que**, lors du déclenchement d'une décharge de pression rapide, un message d'erreur est généré.
